# EUROPEAN PATENT APPLICATION

(11) **EP 3 459 912 A1**
(43) Date of publication of application: **27.03.2019**
(21) Application number: 17193239.5
(22) Date of filing: 26.09.2017
(51) Int. Cl.: C02F 3/12, C02F 3/30, C02F 3/00

(54) **A METHOD AND APPARATUS FOR TREATING WASTEWATER**

(71) Applicant: Xylem IP Management S.à.r.l., 1259 Senningerberg (LU)
(72) Inventor: Lawrence, Darren, Paul, Rugby, Warwickshire CV21 1FA (GB); Newman, Jonny, Owen, Long Buckby, Northamptonshire NN6 7QA (GB); Lazic, Aleksandra, 17062 Solna (SE); Henriksson, Helena Göransdotter Åsa, 19139 Sollentuna (SE)
(74) Representative: Elkington & Fife LLP

(57) **Abstract**

There is provided a method for treating wastewater, the method comprising a first treatment process comprising the steps of: providing wastewater from a wastewater supply to a first vessel comprising a first wastewater treatment substrate; treating the wastewater in the first vessel so as to provide treated wastewater; and discharging at least a portion of the treated wastewater from the first vessel; and a second treatment process comprising the steps of providing wastewater from the wastewater supply to a second vessel comprising a second wastewater treatment substrate; treating the wastewater in the second vessel to provide treated wastewater; and discharging at least a portion of the treated wastewater from the second vessel. The first treatment process further comprises the steps of: mixing the contents of the first vessel so as to suspend at least a portion of the first substrate in treated wastewater; and, subsequently, discharging at least a portion of the treated wastewater and suspended substrate from the first vessel by transferring a portion of the fluid contained in the second vessel into the first vessel so as to displace the treated wastewater and suspended substrate of the first vessel.

## Description

### Field of the invention

This invention relates to a method for treating wastewater, in particular a method for treating wastewater comprising matter by reducing the carbon, phosphorus and nitrogen content of the water. The invention also relates to a wastewater treatment system.

### Background of the invention

Wastewater treatment processes are used worldwide for reducing levels of contaminants in water, such as in sewage treatment. A particular example of common contaminants is nutrient pollution, which is caused by excessive levels of nitrogen and phosphorus in the air and water and particularly resulting from sewage and industrial discharges. Excessive levels of nitrogen and phosphorus in the water can have diverse and far-reaching impacts on public health, the environment and the economy. Accordingly, sewage treatment is essential for reducing damage to the environment caused by these contaminants.

Existing sewage treatment processes utilise a number of processes performed in an arrangement of tanks and processing apparatuses to reduce the amount of nitrogen, phosphorus and/or carbon in wastewater. These can include processes relying on phase separation techniques, chemical- or bacteria-based removal and/or polishing. In some removal steps, processing may utilise bacteria under anaerobic conditions, anoxic conditions and/or aerobic conditions to remove contaminants. For example, wastewater may be processed in a tank that is held under anaerobic conditions, before being transferred to a second tank for treatment under aerobic conditions, and eventually transferred to the phase separation unit. This configuration has been used worldwide since the 1920s, and took serious nutrient removal advances in the 1980s. Most modern sewage treatment plants follow the same basic principles.

Increasingly, requirements for effluent quality (e.g. targets for concentrations of nitrogen and phosphorus) in jurisdictions across the world are becoming more stringent and so improved treatment processes are required. In addition, increasing the capacity of wastewater throughput and the efficiency of the treatment processes have become high priorities for the industry. All of this is in light of a drive to reduce the environmental impact of these processes and, in particular, the desire to reduce the energy and chemical additives involved in processing the wastewater.

Moreover, there are demands for increased capacity and throughput, which leads to pressure to reduce the large footprints of treatment systems and the high energy requirements involved in moving and treating large volumes of fluid. Accordingly, it is important that the efficiency of these systems is improved. It would also be beneficial if improvements to these systems could be retrofitted so as to avoid complete replacement of existing infrastructure.

One particular aspect of wastewater treatment that is often an area of research is the handling of substrates used in wastewater treatment. Existing systems typically require long settling periods in which the substrates used for wastewater treatment settle out so that they can be graded and removed. Such processes are often time consuming and occupy water treatment vessels, leading to long periods where the treatment vessels cannot be fed with wastewater and/or large footprint requirements for multiple tanks or systems. Moreover, in these systems and in other systems, the systems sometimes require complex sludge removal setups, typically involving numerous outlets provided at various heights for withdrawing fluid from a particular part of the vessels associated with particular substrate components. These processes often rely on large quantities of water to displace the substrates, which can requires expensive pumping equipment and/or additional systems for providing large volumes of water at only particular points in the process.

An objective of the invention is to address the abovementioned problems.

### Summary of the invention

In a first aspect of the invention, there is provided a method of treating wastewater according to claim 1. In particular, the method comprises a first treatment process comprising the steps of: providing wastewater from a wastewater supply to a first vessel comprising a first wastewater treatment substrate; treating the wastewater in the first vessel so as to provide treated wastewater; and discharging at least a portion of the treated wastewater from the first vessel; and a second treatment process comprising the steps of providing wastewater from the wastewater supply to a second vessel comprising a second wastewater treatment substrate; treating the wastewater in the second vessel to provide treated wastewater; and discharging at least a portion of the treated wastewater from the second vessel. The first treatment process further comprises the steps of: mixing the contents of the first vessel so as to suspend at least a portion of the first substrate in treated wastewater; and, subsequently, discharging at least a portion of the treated wastewater and suspended substrate from the first vessel by transferring a portion of the fluid contained in the second vessel into the first vessel so as to displace the treated wastewater and suspended substrate of the first vessel.

In other words, the method comprises a process which can reduce the organic content or inorganic content of water (e.g. the carbon, phosphorus and nitrogen content) which utilises a system or apparatus comprising two water treatment tanks, each tank being provided with a wastewater inlet, an outlet and containing a substrate adapted to treat the wastewater. The method comprises at least two treatment operations corresponding to each of the tanks in the system, each operation comprising supply of wastewater to one of the tanks, treatment of the wastewater in the tank using the substrate and the subsequent removal of water that has been treated (e.g. water with a reduced carbon, nitrogen and/or phosphorus content) from the tank via the respective outlet in the tank. The method also comprises a substrate removal phase in which the water (e.g. wastewater, treated wastewater or a mixture thereof) and substrate in one the tanks is agitated so as to mix or deagglomerate/break up the substrate in the water, a portion of which mixture is then subsequently removed from the tank (e.g. a lighter/more buoyant portion). As a result of the agitation of the contents of the tank, the substrate, which prior to the mixing step will be settled or stationary in tank, is suspended in the water. The method can also include a settling step or period after agitation in which some of the substrate settles (e.g. at the base of the tank) or re-agglomerates, provided that at least a portion of the substrate remains suspended in the water. The removal of the mixture in this method comprises removing a portion of the suspended substrate from the tank using fluid provided from the other tank (e.g. water (wastewater or treated water)) by moving the fluid (i.e. fluid contents of the first tank) from the other tank to the tank that has just undergone the agitation process. The fluid thus can displace the mixture of the suspended substrate and water through the outlet.

Embodiments of the invention therefore provide a wastewater treatment method with an improved process for dealing with substrate removal. Substrate removal is important for ensuring that excess substrate is removed during the process, since the substrate will typically retain some of the matter removed from the wastewater (e.g. carbon and phosphorus) and thus increase in mass. The method in the first aspect utilises a two vessel system with a step in which the substrate of the first vessel is suspended in water and subsequently removed using fluid from the other of the two vessels. This provides a number of advantages.

One such advantage is that embodiments of the method can significantly reduce the footprint of a treatment system and reduce the costs associated with water treatment, leading to efficiency benefits. For example, in the claimed method, fluid such as water is used to displace suspended substrate, which typically will require relatively large volumes of fluid (as compared to the typical feed of wastewater) provided in a relatively short period of time so as to remove the suspended solids while they remain suspended (i.e. before they have an opportunity to settle). In this case, fluid is provided from a store in the form of another wastewater treatment vessel (in the case of the first vessel, provided from the second vessel). This avoids the requirement for a separate equalisation or buffer tank, which would otherwise dramatically increase the footprint of the system, and/or a variable input of wastewater. In other words, since wastewater is typically supplied at a relatively low volume, low pressure amounts in the step of providing wastewater compared to the relatively higher volume, low pressure amounts, there is no need for a variable input water feed (or alternative, such as a equalisation or buffer tank) that can provide these varying flows of water for the suspended substrate removal step, which reduces costs and footprints. Moreover, this arrangement has the benefit that the wastewater provided to the second vessel is treated while awaiting transfer into the first vessel (and vice versa, in some embodiments) as compared to where the wastewater is stored in a equalisation or buffer vessel or similar. This increases the capacity of the treatment processes. This embodiment can allow for a low energy footprint and hence can lead to significant savings in the total energy requirement of the system.

Embodiments also provide a method that can reduce the downtime of the total treatment process by reducing the time required for settling of substrate after intensive mixing. In this aspect, some of the substrate is still caused by settling as much shorter or no settling periods can be used. This is because the method removes substrate while still suspended in water, as opposed to allowing all of the substrate to settle and subsequently withdrawing extracts at particular levels in the vessel.

The fluid transferred from one vessel to another vessel can be a liquid (such as water or treated wastewater), a liquid with solids suspended therein (e.g. substrate) and can include a slurry or sludge. In one embodiment, the fluid is treated wastewater. Thus, the fluid transferred from the second vessel to the first vessel, or from the first vessel to the second vessel comprises treated water. In some embodiments, the fluid may consist of treated wastewater. This has the advantage that the water provided to the vessel to displace the suspended solids and treated water does not subsequently need to be treated, and instead new feed of water can be introduced. Moreover, in some embodiments where the treated water is displaced towards the top of a vessel (e.g. where the inlet for wastewater is provided at or adjacent the base of the vessel, with the outlet for treated being position above the inlet), the treated water can be transferred to the other vessel at least partly under the force of gravity, thereby reducing the requirement for particular pumping systems and the associated cost and footprints. Thus, a single input of wastewater with a basic pumping system can be employed.

The steps of each of the first and second treatment processes may be sequential, or may be performed at the same time. For example, the step of treating wastewater in each of the processes may simultaneously occur as wastewater is provided to the tank (for example, because providing wastewater may bring the wastewater into contact with the substrate (e.g. by causing percolation of the wastewater through the substrate) and thus lead to treatment of the wastewater. Similarly, the step of discharging treated wastewater may occur as wastewater is provided to the respective vessel (e.g. as further wastewater is provided to the vessel) and as wastewater is treated. For example, the step of providing wastewater to the first or second vessel may cause treated wastewater to be displaced from the first or second vessel, respectively, such that treated wastewater is discharged from the first or second vessel, respectively. It will be appreciated that prior to performing the first and/or second processes, the first and/or second vessels may already comprise wastewater and treated wastewater, and thus, the step of discharging treated wastewater may occur simultaneously as wastewater is provided to the respective vessel. This may also depend on the arrangement of the outlet and the means by which the wastewater is discharged.

The step of mixing may be carried out after or during the steps of the treatment processes. For example, the fluid transfer may be carried out while wastewater is fed to the first tank, or, in some embodiments, after the feed has stopped (in some embodiments, the feed may be continuous). In an embodiment, the step of mixing is carried out during the step of treating the wastewater. In this way, the process may be more efficient as the step of treating, which may involve some mixing and/or aeration, can be combined with the mixing required to suspend the substrate in the water. For example, in some embodiments where the treatment of the wastewater comprises treatment under aerobic conditions, aeration of the contents of the vessel in question may be required, which aeration may lead to the suspension of solids in treated water. Thus, a reduced processing time and more efficient process can be possible. In some embodiments, the fluid transfer may be a relatively short (in duration) fluid pulse, compared to the relatively long (in duration) feed of wastewater into the first and second vessels from the wastewater supply during the first and second processes.

While the step of discharging the suspended substrate and treated wastewater inevitably discharges some treated wastewater, the steps of discharging treated wastewater in the first and second processes are separate to the step of discharging the suspended substrate and treated waste water such that treated water is discharged in the first and second processes without suspended solids provided by the mixing step. By having a separate discharge step, this has the advantage that the treated water can be directly discharged from the system (e.g. bypassing any further treatment processes, such as solids removal processes, if required). This reduces the burden on downstream processes and can increase the throughput of the system. By separate, it is meant that there are two distinct steps (i.e. a single point at which only treated wastewater is discharged can be identified, although in some embodiments the discharge of treated wastewater may be immediately followed by discharge of treated wastewater and suspended substrate). In one embodiment, the discharge of treated wastewater in the first process is halted prior to the discharge of treated water and suspended substrate after the mixing step.

In one embodiment, the first process comprises providing wastewater to the first vessel from the wastewater supply in an amount of up to 50% of the total capacity of the vessel (for example, up to 40% of the vessel, up to 30% of the vessel, up to 25% of the vessel; between 5% and 50% of the capacity (by volume) of the vessel; between 10% and 40% of the capacity; or between 10 and 30% of the capacity). In other words, the total volume of wastewater provided to the first vessel in the first process is up to 50% of the total volume that can be held by the first vessel (and the other ranges referred to above). In addition, the second process may also comprise providing wastewater to the second vessel in the above amounts. Wastewater contained within the first vessel (which can comprise at least a portion of the wastewater provided in the step of providing wastewater and any wastewater that was in the vessel prior to the step of providing wastewater to the vessel (e.g. where the processes are repeated, wastewater provided in a previous iteration of the process)) is treated through interaction or contact with the substrate. During each of the first and second processes, treated wastewater is also discharged from the first vessel, which discharge can be carried out during the steps of providing wastewater to the first vessel and/or as wastewater is treated or, in additional or alternatively, after these steps have been performed (or a combination thereof). An amount of at least 10% of the total capacity (by volume) of the first vessel may be discharged as treated water in this step, for example between 10% and 50%, between 20% and 40%. Accordingly, not all of the treated water may be discharged in this step, and some may remain in the vessel. In some embodiments, the amount of treated discharged in this step may equal the amount of wastewater provided to the first tank, for example where the wastewater displaces the treated wastewater.

In some embodiments, at least 75% (e.g. at least 80%, at least 90%, at least 95% or at least 99%) of the treated water is discharged directly from the first vessel to an outlet or further processing method (without passing through the second vessel) and less than or equal to 20% (e.g. less than or equal to 15%, less than or equal to 10%, less than or equal to 5% (e.g. 1% to 5%), less than or equal to 2%) of the total treated wastewater produced by the method is transferred to the second vessel.

The method in the first aspect is for treating wastewater, which requires the reduction of the content of contaminants in the water; for example, by reducing the amounts of particular compounds, elements, matter etc. It will be appreciated that reducing the content of these components in the water can include removal through conversion into other compounds or components and subsequent release (e.g. as a gas) and/or uptake by the substrate. For example, the treatment may comprise nitrification and denitrification (e.g. to oxidise ammonia (NH₃) to nitrate (NO₃) and subsequently reduce nitrate to nitrogen gas (N₂)). In an embodiment, treatment may comprise biological phosphate removal ("Bio-P"), which is advantageous as it can avoid use of harsh compounds in typical chemical precipitation removal techniques and with reduced sludge formation. These treatments may be combined such that biological phosphate removal is carried out in combination with nitrification and denitrification in each vessel. In one embodiment, the method is thus for reducing the nitrogen, carbon and phosphorus content of the wastewater. In some embodiments, the step of treating the wastewater in the first and/or second process comprises treating the wastewater under anaerobic, anoxic and aerobic conditions so as to reduce the nitrogen, carbon and phosphorus content of the wastewater. This could be in the format of aerobic treatment in the presence of oxygen, then as the oxygen in used up the treatment could shift to anoxic treatment followed by anaerobic. Alternatively, the water may first be treated under anoxic conditions, which tend towards anaerobic conditions as oxygen content is reduced, followed by an increase in oxygen content in the water/substrate (e.g. as a result of aeration) leading to aerobic conditions. It will be appreciated that these will not be distinct phases, but different conditions may occur in different parts of the vessels. It will also be appreciated that some water may be considered more "treated" than other water - thus references to treated water herein do not necessarily require all of the water to have been treated to the same degree. In embodiments, the change (e.g. cycling) from oxic to anoxic conditions is the driver for treatment substrate adaption. This process can be measured as redox potential and can vary from -350mV to +120mV. A rapid change in redox potential caused by the fluid transfer step can switch the oxic and anoxic processes very quickly and hence increases treatment efficiency.

For example, in one embodiment wastewater may comprise greater than 5 mg/L total phosphorus (e.g. combined amount of phosphorus in both organic and inorganic forms) and treatment of wastewater may comprise reducing the content to less than 4 mg/L, to less than 2 mg/L, to less than 1 mg/L or less than 0.5 mg/L. In addition or alternatively, in an embodiment, the wastewater may have a total nitrogen content (e.g. an ammonia content) of at least 10 mg/L, in some embodiments at least 20 mg/L (e.g. 20 mg/L to 90 mg/L) and treating the wastewater content comprises reducing the content to less than 15 mg/L total nitrogen, 10 mg/L total nitrogen, less than 5 mg/L total nitrogen or less than 3 mg/L total nitrogen. These can be measured using spectrophotometric methods, such as measurement using a spectral photometer (and a reference, where required). For example, measurements can be made using an instrument such as the WTW photoLab 66, together with tests kits for Chemical Oxygen Demand (COD) (WTW 2503-01, -03, -06, 252071 (total and dissolved)); NH₄-N (WTW 250495, 250329, 252027), Total Nitrogen (WTW 50494,252018); PO₄-P (WTW 252075, 252076); Pₜₒₜ (WTW 252075, 252076); and NO₃-N (WTW 252085).

Substrate includes solids which are able to treat wastewater, such as a solid containing bacteria for wastewater treatment or materials/compounds for wastewater treatment. The substrate can be in the form of an activated sludge or derivative of an activated sludge. By activated sludge it is meant a biological floc composed of bacteria and protozoa. The substrate in embodiments will be a mixture of solids that can agglomerate or deagglomerate into flocs and which can be suspended in water and/or settle. For example, the substrate may have an average particle size (by volume) of 25 µm to 600 µm, or 100 µm to 400 µm (e.g. where the substrate is floc) and may be deagglomerated during the mixing/agitating step such that the suspended substrate has an average particle size of 5 to 25 µm. The average particle size can be measured by laser scattering techniques. By average it is meant the mean. In some embodiments, the substrate may comprise a polymer media carrier for example a porous or open polymeric structure. Thus, in embodiments, the step of mixing leads to a suspended solids in the treated water (e.g. a heterogeneous mixture of substrate and treated water). In embodiments, substrate also includes solids generated in the treatment processes. In embodiments, the substrate can extend from the base of the first and/or second vessel to a height between 50% to 85% (for example, 75%) of the total height of the vessel. In other embodiments, the substrate can extend from the base of the first and/or second vessel to a height between 50% to 85% (for example, 75%) of the height from the base to the outlet (e.g. where the outlet is a decanter).

In an embodiment, the flow rate of the fluid transferred during the step of transferring a portion of the fluid contained in the second vessel to the first vessel is greater than the flow rate of the wastewater provided to the first vessel from the wastewater supply during the step of providing wastewater from a wastewater supply to the first vessel. In a further embodiment, the fluid of the second vessel is transferred to the first vessel by pumping the fluid from the second vessel using a high volume, low pressure pump. Pumping in this manner will allow large volumes of fluid to be transferred into the first vessel so as to displace the treated wastewater and suspended substrate prior to the substrate settling, but at a low pressure so as to avoid further agitating the substrate. In embodiments, the fluid of the second vessel is transferred to the first vessel at a higher volume per unit time than in the step of providing the supply of wastewater to first vessel. In an embodiment, the step of aerating is carried out also during the step of providing wastewater to one of the vessels. This can provide the further advantage of increasing the mixing in the vessel as a result of the influx of wastewater, which can increase the efficiency of the process and reduces the energy requirements of the aeration process.

In a further embodiment, the first vessel further comprises a decanter and the step of discharging at least a portion of the treated wastewater and suspended substrate from the first vessel comprises displacing the portion of the treated wastewater and suspended substrate out of the decanter. In other words, the water and suspended solids are displaced over, via or through an outlet in the form of a decanter. While decanters are occasionally used in wastewater treatment, the use of a decanter in the step of discharging at least a portion of the treated wastewater and suspended substrate is particularly advantageous as it provides a straightforward method removing the suspended substrate, which does not rely on a complex output provided at varying heights of the tank and which has particular benefits when used with the fluid transfer to displace the suspended substrate and water. In some embodiments, the decanter is located at or adjacent the top of the vessel and the input is located below the decanter (in some embodiments, at or adjacent the base of the vessel). In a further embodiment, the second vessel further comprises a decanter and the step of discharging at least a portion of the treated wastewater and suspended second substrate from the second vessel, where present, comprises displacing the portion of the treated wastewater and suspended second substrate out of the decanter in the second vessel. Decanter can include a pipe, or weir which prevents flow until a fluid reaches a particular point. In embodiments, the decanter or, alternatively, any other type of outlet, is provided at a height of 70% to 100% of the total height of the height of the first and/or second vessel, for example at a height of 75% to 85% of the total height.

In another embodiment, the second treatment process further comprises the steps of: mixing the contents of the second vessel so as to suspend at least a portion of the second substrate in treated wastewater; and subsequently discharging at least a portion of the treated wastewater and suspended substrate from the second vessel. This provides a similar fluid transfer effect to that provided for the first vessel and thus allows the substrate of the second vessel to be discharged in the same manner. This increases the efficiency of the process. In embodiments, the steps of (i) mixing the contents of the second vessel and subsequently discharging at least a portion of the second substrate in treated wastewater and the steps of (ii) mixing the contents of the first vessel and discharging at least a portion of the first substrate in treated wastewater are synchronised such that (i) is carried out as the wastewater is provided to the first vessel and (ii) is carried out as wastewater is provided to the second vessel. In a further embodiment, (i) and (ii) may be synchronised such that (ii) is carried out after (i) has been carried out. In other words, (i) and (ii) are not carried out at the same time or are offset from one another so as to not overlap.

In a further embodiment, the step of discharging at least a portion of the treated wastewater and suspended substrate from the second vessel comprises either: transferring a portion of the fluid contained in the first vessel into the second vessel so as to displace the treated wastewater and suspended substrate of the second vessel; or transferring a portion of the fluid contained in a third vessel comprising a third wastewater treatment substrate into the second vessel so as to displace the treated wastewater and suspended substrate of the second vessel. Where a third water treatment vessel is provided, the method may further comprise a third treatment process having the same steps as the first and second treatment processes. In a further embodiment, the flow rate of the fluid transferred during the step of transferring a portion of the fluid contained in the first or third vessel to the second vessel is greater than the flow rate of the wastewater provided to the second vessel from the wastewater supply during the step of providing wastewater from a wastewater supply to the second vessel. The fluid transfer step in these embodiments may be under the abovementioned conditions referred to in respect of the fluid transfer from the second vessel to the first vessel.

In another embodiment, the method further comprises the step of providing the treated wastewater and suspended substrate to a solids processing assembly to remove the suspended substrate from the treated wastewater after discharge from the respective vessel. The solids processing assembly may include a clarifier, a filter (e.g. a disk filter, a media filter, an ultrafilter, microfilter, nano-filter, microscreens, cloth filters), a hydro cyclone or a polishing apparatus. In this way, the step of dealing with the suspended substrate can be dealt with in a separate, dedicated processing step. This, combined with the step of discharging the substrate and water, means that the method, and particularly the first process (and optionally the second process), is not required to discriminate solids in as much depth. Instead, as the solids are processed further downstream, there is less burden to only remove particular solids. This reduces the burden on the upstream first/second processes and reduces downtime of these processes. Embodiments thus lead to reduced interference with the generation of treated wastewater. Embodiments also reduce the complexity of the solids removal equipment. In some embodiments, all of the water discharged from the first and/or second vessels is provided to the solids processing assembly.

In a further embodiment, the first treatment process further comprises the step of aerating the first vessel and the second treatment process comprises the step of aerating the second vessel. In yet a further embodiment, the step of aerating in each of the first and second treatment processes is carried out after the respective step of providing a wastewater to the respective first or second vessel. In an embodiment, the first treatment process and the second treatment process are synchronised such that the first vessel is aerated as the step of providing wastewater from the wastewater supply to the second vessel is performed and/or such that the second vessel is aerated as the step of providing wastewater from the wastewater supply to the first vessel is performed. In another embodiment, the step of aerating is carried out during the step of providing wastewater to one of the vessels. This can provide the further advantage of increasing the mixing in the vessel as a result of the influx of wastewater, which can increase the efficiency of the process and reduces the energy requirements of the aeration process. In an embodiment, aeration is carried out using an aeration system located at the base of the respective vessel. The aeration system or apparatus is adapted for both mixing and oxygen transfer.

In an embodiment, the step of aerating the first or second vessel comprises increasing the dissolved oxygen content of the contents of the first or second vessel, respectively. This can be using any method known in the art, such as direct introduction of air or oxygen (via bubbling, for example as fine bubble diffused aeration or coarse bubble aeration), intense mechanical mixing in an oxygen-containing atmosphere or combinations thereof.

In another embodiment, the step of aerating the first vessel comprises mixing the contents of the first vessel so as to suspend at least a portion of the first substrate in treated wastewater; and wherein the step of discharging at least a portion of the treated wastewater and suspended substrate from the first vessel is carried out after the step of aerating the first vessel. In embodiments where the method comprises the step of mixing the contents of the second vessel so as to suspend at least a portion of the second substrate in treated wastewater, the step of discharging at least a portion of the treated wastewater and suspended substrate from the second vessel may be carried out after the step of aerating the second vessel. In this way, the process can be more efficient as the process of aeration, which typically leads to some fluidization as a result of the turbulence caused by the introduction of oxygen into the water, can result in suspension of the substrate. In this way, the step of aeration can provide all of the mixing required to suspend the substrate and no additional mixing is required.

In an embodiment the first and second treatment processes are repeated. The processes are thus cycles which can be used to treat wastewater in a continuous fashion. This is particularly advantageous given the synchronisation of the systems, which leads to a continuous wastewater treatment process, with a continuous output. This makes the water treatment process more efficient, with reduced time required where the wastewater feed is halted and a more uniform output. In other words the first and second treatment processes are first and second treatment cycles and the method comprises performing the first and second treatment cycles in a synchronised manner, with the first and second treatment cycles offset from one another. These synchronised cycles can allow for a continuous feed flow to the treatment process without the use of buffers or equalisation.

In a further embodiment, the method further comprises further processing the treated wastewater and/or the treated wastewater and suspended substrate by directing the treated wastewater and/or the treated wastewater and suspended substrate from the first or second vessels to a further treatment assembly. In a further embodiment, the water treatment assembly is selected from one of: a sequence batch reactor, bioreactor, a conventional activated sludge system, a fixed film system or a solids removal system. In another embodiment, the method comprises a further substrate removal step in which a portion of the substrate is removed from the first and/or second vessel, optionally wherein the portion of substrate is transferred to the further treatment assembly.

In another embodiment, the step of discharging at least a portion of the treated wastewater from the first or second vessel is carried out as wastewater is provided to the first or second vessel, respectively. In this way, the wastewater treatment process provides a continuous treatment process. Moreover, embodiments enable the influent wastewater to help discharge the treated wastewater so as to reduce the energy requirements for removing the treated wastewater. For example, in some embodiments, the treated wastewater may be pumped out of the respective vessel by a pump. In a further embodiment, the step of providing wastewater to the first or second vessel causes treated wastewater to be displaced from the first or second vessel, respectively, such that treated wastewater is discharged from the first or second vessel, respectively. Thus, in one embodiment, the first and/or second vessel further comprises a decanter and the step of discharging at least a portion of the treated wastewater from the first vessel comprises displacing the portion of the treated wastewater out of the decanter. In this way, the influent wastewater can be used to reduce the energy required to displace the treated wastewater. This reduces the energy requirements of the process and the requirements for additional equipment.

In a second aspect of the invention, there is provided a wastewater treatment system for treating wastewater to provide treated wastewater. The system comprises a first vessel and a second vessel, each vessel comprising an input, an output and a wastewater treatment substrate; a wastewater supply fluidly connected to the inputs of the first and second vessels for providing wastewater to the first and second vessels; and a fluid transfer assembly fluidly connecting the first and second vessels so as to allow the transfer of fluid from the second vessel to the first vessel.

The system also comprises a mixing apparatus adapted to mix the contents of the first vessel so as to suspend a portion of the wastewater treatment substrate in treated wastewater in the first vessel; and a controller for controlling operation of the fluid transfer assembly and adapted to, after the mixing assembly has been operated, operate the fluid transfer assembly so as to transfer fluid from the second vessel to the first vessel and thereby displace and discharge at least a portion of the treated wastewater and suspended substrate from the first vessel via the outlet of the first vessel. The mixing apparatus or assembly can be any means that can be used to mix or agitate the substrate in the water. For example, in some embodiments, the mixing apparatus may be an aeration apparatus (for aerating the contents of the vessel in which it is located), such that the act of aerating the vessel results in the mixing of the contents of the vessel. In other embodiments, the mixing apparatus may be provided in addition to an aeration apparatus.

The controller includes any means of automatically controlling a process, which can include logic arrangements, circuit boards and/or processors. The controller may comprise a predetermined set of instructions for performing the steps in a predetermined manner and/or may include additional components, such a sensors, to actively determine whether an event has occurred.

### Brief description of the drawings

Specific embodiments of the invention will now be discussed in detail with reference to the accompanying drawings, in which:
Figure 1 shows a wastewater treatment apparatus in accordance with an embodiment of the invention;
Figure 2 shows a schematic drawing of a wastewater treatment apparatus in accordance with an embodiment of the invention;
Figures 3a to 3g show schematic drawings depicting a method of treating water using a wastewater treatment apparatus in accordance with an embodiment of the invention; and
Figure 4 shows a schematic drawing of a wastewater treatment apparatus in accordance with another embodiment of the invention.

### Detailed description

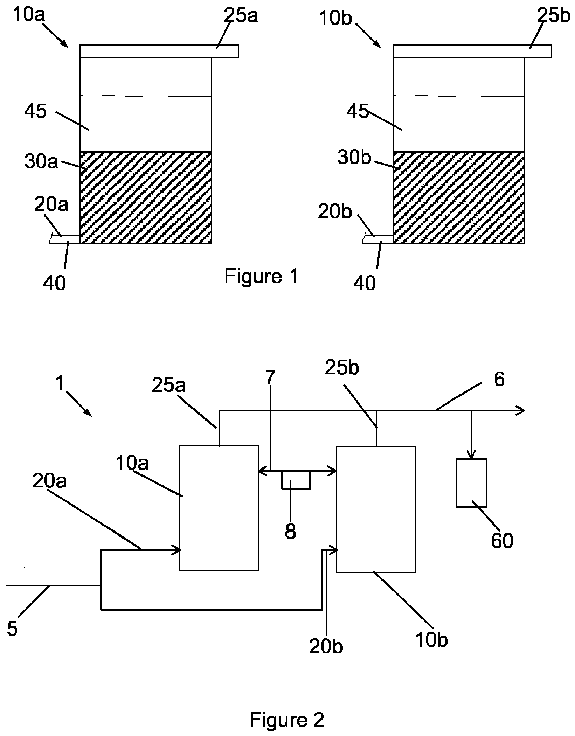

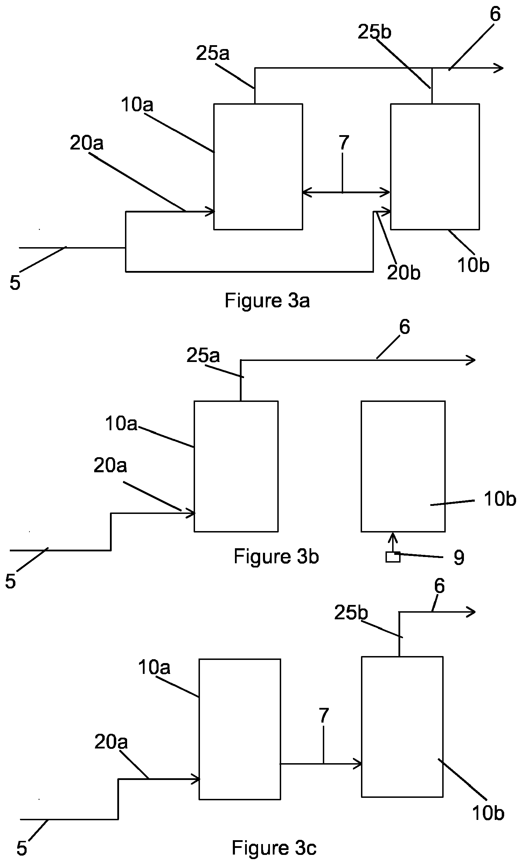

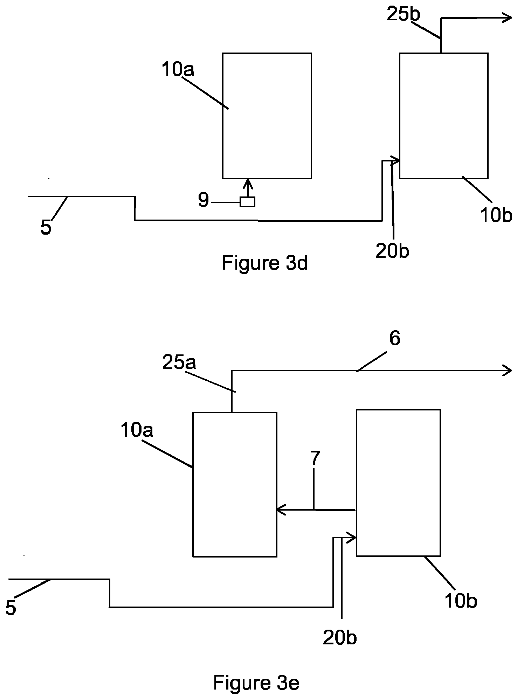

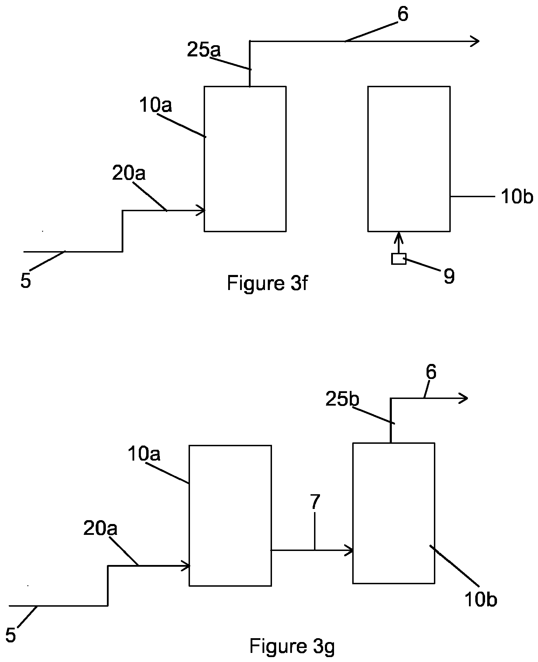

An embodiment of the invention is shown in Figures 1 to 3, where a water treatment system 1 is shown in schematic form. Figure 1 process a more detailed schematic overview, with Figures 2a to 2f and Figure 3 providing a schematic overview of a method using the wastewater treatment apparatus.

The water treatment system 1 in this embodiment comprises a wastewater supply 5 for supplying wastewater 40 to the system and, in particular, to two water treatment tanks 10a, 10b as will be explained in more detail below. The water treatment system 1 also comprises an outlet 6 connected to both of the water treatment tanks 10a, 10b, which outlet 6 either leads to a second water treatment assembly 60 via outlet branch 6b or is directly discharged via outlet branch 6a as treated wastewater. Water processed by the second water treatment assembly 60 is then discharged by outlet branch 6c. The water treatment system also includes an additional fluid transfer component in the form of a fluid transfer assembly 7, which is provided with a pump system 8, and which fluidly connects water treatment tanks 10a, 10b, as will be explained in more detail, below.

The structure the water treatment tanks 10a, 10b is shown in schematic form in Figure 1. Each of the tanks 10a, 10b comprise large capacity fluid containers and is provided with a substrate 30a, 30b for the treatment of wastewater through the removal of carbon, phosphorus and nitrogen. In this embodiment, the substrate 30a, 30b provided in each of the tanks 10a, 10b comprises a highly flocculated activated sludge that can form a compact bed with a sludge volume index of less than 120 mL/g (for example, 100 mL/g or 80 mL/g) and with a height that extends to around 50% of the height of the respective tank 10a, 10b while feeding with wastewater 40. Each activated sludge substrate 30a, 30b comprises typical activated sludge bacteria including ammonium-oxidizing bacteria (AOB) to nitrify, denitrifiers to remove nitrate and phosphate accumulating organisms (PAO) to remove phosphorus biologically. The presence of the activated sludge substrate 30a, 30b enables the tanks 10a, 10b to form a biological treatment system (in this embodiment, a pretreatment system prior to the second water treatment assembly 60) for the removal of carbon, nitrogen and phosphorus from the wastewater.

Each of the tanks 10a, 10b also comprises an inlet 20a, 20b located adjacent their respective bases, so that fluid, such as influent wastewater 40, can be inserted at the base of the respective tank 10a, 10b. The tanks 10a, 10b also comprise an outlet in the form of a decanter 25a, 25b provided at the top of each of the tanks 10a, 10b over which treated wastewater 45 can flow. The decanters 25a, 25b are fluidly connected to the outlet 6.

The fluid transfer assembly 7, which is located between the two tanks 10a, 10b, comprises a series of pipes for providing fluid connectivity between the tanks 10a, 10b so as to allow the flow of fluid between the first and second tanks 10a, 10b (in this case, treated wastewater 45) and valves for controlling said fluid flow (not shown). More specifically, the fluid transfer assembly 7 comprises a first receiving pipe 7a', which acts as an outlet for the first tank 10a, and a second receiving pipe 7a", which acts as an outlet for the second tank 10b. The receiving pipes 7a', 7a" are arranged at a height of approximately 75% of the total height of each of the tanks 10a, 10b, which allows the receiving pipes 7a', 7a" to syphon treated wastewater 45 from the tanks 10a, 10b above the height of the substrate 30a, 30b. The receiving pipes 7a', 7a" both feed into a central pipe 7b, which in turn connects to the inlets of the tanks 20a, 20b. This arrangement has a number of advantages as it simplifies the pipe systems for connecting the two tanks 10a, 10b by relying on the same inlet as that for a feed of wastewater 40 from supply 5. A pump system 8 is also provided for pumping the treated water from one tank 10a, 10b, to the other 10a, 10b through transfer assembly 7. In this embodiment, the pump is a high volume, low pressure pump which is able to provide fluid at a higher flow rate than the wastewater supply 5.

In this embodiment, the water treatment system also includes the second water treatment assembly 60. This assembly 60 provides a means of further treating fluid discharged from the tanks 10a, 10b and, in this embodiment, comprises a clarifier for the removal of solids from treated wastewater. As will be explained in more detail below, the second water treatment assembly 60 is only used in this embodiment under particular conditions, when the treated water also comprises suspended solids 45'. Accordingly, outlet 6 is selectively connected to the second water treatment assembly 60 under the conditions explained below.

The use and configuration of the wastewater treatment system 1 is explained below with reference to the schematic drawings of Figure 2 and Figures 3a to 3f. The second wastewater treatment assembly 60 is omitted from Figures 3a to 3f. Figure 2 and 3a schematically illustrate the fluid paths used in the depicted part of the wastewater treatment system 1 and Figures 3b to 3f show the sequential operation of the first and second tanks 10a, 10b under first and second wastewater treatment processes. It should be noted that the schematic arrows shown in Figures 2 and 3a to 3f illustrate fluid movement schematically and do not correspond to the precise flow paths, which instead can be derived from Figure 1. For example, although the flow path using fluid transfer apparatus 7 is shown as a straight line in Figures 2, 3a and 3d, it will be appreciated that instead this comprises transfer through one of the receiving pipes 7a', 7a", through the central pipe 7b and into one of the inlets 20a, 20b (the specific fluid transfer path being controlled by valves in the fluid transfer assembly 7).

The method of using the wastewater treatment system 1 to treat wastewater 40 comprises first and second water treatment processes, corresponding to primary use of the first and second tanks 10a, 10b, respectively. The first wastewater treatment process comprises providing wastewater 40 from the supply 5 to the first tank 10a through the inlet 20a such that wastewater enters the tank 10a at the base of the tank 10a. As the wastewater 40 enters the tank 10a, it percolates through the substrate 30a which is in the form of a settled, compact sludge bed.

In this embodiment, as the wastewater 40 first percolates through the substrate 30a, nitrate is present. The substrate 30a causes denitrification under anoxic conditions. As denitrification occurs, the nitrate content is reduced such that the conditions move from anoxic towards anaerobic conditions. During these stages, the substrate 30a release phosphorus and the phosphate concentration in the tank increases. Thus, this process promotes denitrification and phosphorus release as part of the biological phosphorus removal processes. Then, as oxygen is introduced (e.g. during aeration), the conditions move towards aerobic conditions in which phosphorus is removed and ammonia present in wastewater is oxidised to nitrate.

Moreover, as more wastewater 40 is added to the tank 10a through the inlet 20a, the level of the contents of the tank 10a rises. As the wastewater 40 is added to the base of the tank 10a at a relatively low flow rate, mixing of the wastewater 40 with treated water 45 is minimised or avoided, and so it is the treated water 45 that is located at or adjacent the upper surface of the contents that is displaced towards the top of the tank 10a. Once the level of the treated water 45 reaches the decanter 25a, the treated water 45 at of the tank 10a flows out of the tank 10a and into the outlet 6. In this embodiment, as this occurs, the outlet 6 directly discharges the treated water 45 via outlet branch 6a, avoiding the second water treatment assembly 60. After a set period of time, the supply of wastewater 40 from the wastewater supply 5 is halted to the first tank 10a (the exact process is discussed, below). In this embodiment, about 90 to 98% of the total treated wastewater 45 discharged from the first tank will be directly discharged as a result of displacement by influent wastewater 40. Moreover, in this embodiment, the amount of influent (and thus the amount of effluent discharged in this manner) equates to approximately 50% of the volume of the tank 10a.

The first tank 10a is then aerated. The aeration process in this embodiment comprises four distinct, sequential phases (a) a rapid mix phase, (b) a high dissolved oxygen phase, (c) another, lower dissolved oxygen phase and (d) a final fluidization (low aeration) phase.

Phase (a) is an intensive mixing of the substrate 30a using aeration by the introduction of bubbles of air via an aeration apparatus (not shown) provided at the bottom of the tank 10a. The purpose of this phase is to re-suspend the substrate 30a, which during the previous influent and treatment stages can become very compact at the bottom of the tank 10a.

Phase (b) is a high dissolved oxygen aeration procedure in which the dissolved oxygen content of the contents of the tank 10a is increased. In this embodiment, phase (b) is carried out to increase the dissolved oxygen to between 4 and 6mg/l, which is relatively high. This relatively high dissolved oxygen content creates a high dissolved oxygen diffusion gradient from the water phase to the substrate phase and ensures that the substrate has the required dissolved oxygen content for the biological processes. In other words, this provides a rapid transition to an aerobic condition in the tank 10a.

Phase (c) is a further aeration process operated at relatively normal dissolved oxygen concentrations of between 1.5 and 2.5 mg O₂/l. The purpose of phase (c) is to provide the conditions under which treatment of the water can occur through the reduction of the carbon concentration of the wastewater and the oxidization of the ammonia in the influent wastewater to nitrate through nitrification.

Phase (d) is the final stage of the aeration process in this embodiment and comprises a lower aeration rate which allows the dissolved oxygen concentration to reduce as well as providing a short settling period for the substrate so as to allow heavier material, with a settling velocity around or above 10m/h, to settle. Lighter substrate components with settling rates <5m/h remain suspended in the water in the tank (forming treated water with suspended solids 45'). The purpose of this final phase is to act as a precursor for a subsequent fluid pulse process, which will be explained below, as the final phase provides a means of selecting and grading the components of the sludge 30a in the tank 10a. No additional settling period is required.

Although the configuration of these phases can be changed depending on the specific requirements of the processes and the maturity of the substrate 30a, suitable ratios for the duration of the four aeration phases ((a) to (d)) can be 5%:20%:65%:10% (for example, in the case where the substrate 30a is less compact) or 10%:30%:55%:5% (where the substrate 30a is more compact). It will be appreciated that treatment of the water will still occur during the aeration steps.

The fluid transfer process is a part of the process used in this embodiment to remove lighter solids (i.e. a lighter part of the treatment substrate) from the tank 10a and is performed after the step of aerating the first tank. In this part of the first treatment process, treated water 45 from the second tank 10b is pumped into the first tank 10a using pump system 8 via the fluid transfer assembly 7. The pump system 8 is adapted to transfer high volumes of treated water 45 from the second tank 10b to the first tank 10a at low pressure, which results in the displacement of the water in the first tank 10a without disturbing the settled portion of the substrate 30a. By using the treated water 45 from the second tank 10b, large volumes of water can be pumped into the first tank 10a to displace the water containing the suspended solids 45' while the solids are still suspended therein. This provides significant advantages as the solids suspended in the water 45' can be removed from the tank 10a using the relatively straightforward process and one which can essentially be combined with (or utilise the mixing caused by) aeration to reduce the downtime of the system. More specifically, in this embodiment, the flow of water from the second tank 10b to the first tank 10a displaces the water contained within the first tank 10a, i.e. the water containing the suspended solids 45', so that the water level in the first tank 10a rises. This causes the water containing the suspended solids 45' to overflow via the decanter 25a and into the outlet 6. This has the advantage that no separate additional solids removal system is necessarily required in the tank 10a, which greatly reduces the complexity of the apparatus and method. The method also has the benefit that there is no requirement for a separate tank for holding water for displacing the suspended solids. The method can also reduce the throughput time for the vast majority of the wastewater 40, since the main tanks 10a, 10b do not have to settle for significant periods. At this point (i.e. during the fluid pulse step), the outlet 6 in this embodiment is connected to the second water treatment apparatus 60 via outlet branch 6b, such that the water containing suspended solids 45' undergoes an additional processing step. This allows for disposal of the suspended solids and use of the clarified and treated water. The water containing suspended solids 45' may have a Total Suspended Solids (TSS) content of between 0 and 4000 mg/L, preferably between 200 and 2500 mg/L.

Although modifications and adjustments can be made, in this embodiment the typical time to run the first process (and/or the second process) is approximately 4 hours, with the aeration lasting approximately 2 hours and the fluid transfer stage lasting approximately 10 minutes. To control the amount of suspended solids, the precise timing of the fluid pulse and/or the aeration procedure can be modified. For example, aeration can be more vigorous or the duration increased to increase the amount of solids removed and/or the time in which the solids can settle before the fluid pulse/transfer begins can be reduced. Alternatively, the fluid pulse could be carried out after or before aeration to displace only very light solids.

With the removal of the water containing suspended solids 45' from the first tank 10a, the first tank 10a is ready to be refilled with wastewater 45 and to repeat the first treatment process.

It will be appreciated from the above that the entire contents of the tank 10a is not discharged (and, in particular, the total amount of water is not discharged), such that there is water remaining in the tank 10a at the end of the first process. This water may still be undergoing treatment or may already be treated, but not discharged.

The second wastewater treatment process is the same as the first treatment process, except that it is carried out in the second tank 10b. Thus, wastewater 40 is provided to the second tank 10b through the inlet 20b such that wastewater enters the tank 10b at the base of the tank 10b. As the wastewater 40 enters the tank 10b, it percolates through the substrate 30b which is in the form of a settled, compact sludge bed. As the wastewater 40 first percolates through the substrate 30b, the wastewater 40 is treated, as explained above. As more wastewater 40 is added to the tank 10b through the inlet 20b, the level of water in the tank 10b rises. As the wastewater 40 is added to the base of the tank 10a at a relatively low flow rate, mixing of the wastewater 40 treated water 45 is avoided, and the treated water 45 is displaced towards the top of the tank 10b. Once the level of the treated water 45 reaches the decanter 25b, the treated water 45 at of the tank 10b flows out of the tank 10b and into the outlet 6. In this embodiment, as this occurs, the outlet 6 directly discharges the treated water 45, avoiding the second water treatment assembly 60. After a set period of time, the supply of wastewater 40 from the wastewater supply 5 is halted to the second tank 10b (the exact process is discussed, below). The second tank 10b is then aerated using the same process as set out above for the first wastewater treatment process. The fluid pulse process is also carried out in the same manner as for the first wastewater treatment process, with the tanks 10a, 10b switched such that the water from the first tank 10a is transferred into the second tank 10b so as to displace water containing suspended solids 45' from the second tank 10b.

The first and second processes are synchronised such that they are carried out at the same time, but in an offset manner so as to provide an efficient, continuous wastewater treatment process. The exact configuration of the processes relative to one another is shown schematically in Figures 3b to 3g, with the figures illustrating the first iterations of the first and second processes in one embodiment.

Figure 3b schematically illustrates the first step in which the first process is initiated. In particular, the first tank 10a is supplied with wastewater 40 from the wastewater supply 5. Treated water 45 is decanted (this may be immediately, or after a period of time after providing influent) from the top of the first tank 10a into the outlet 6 and is discharged from the wastewater treatment system 1. At this stage, tank 10b is aerated with oxygen supply 9 and once this is complete, the fluid pulse step is carried out wherein fluid from the first tank 10a is transferred to the second tank 10b to displace the suspended solids and treated water (see Figure 3c).

After a period of time, and as depicted in Figure 3d, the wastewater supply 5 is switched so as to stop providing wastewater 40 to the first tank 10a and instead to provide the wastewater 40 to the second tank 10b so that the wastewater 40 can be treated in the second tank 10b. Thus, the second wastewater treatment process begins. This has the advantage that the processes are continuous and the supply of wastewater 40 does not have to be halted. Treated water 45 in the second tank 10b is discharged form the second tank 10b via the decanter 25b and into the outlet 6. At this point, the aeration process begins as part of the first treatment process and oxygen is provided to the first tank 10a from an oxygen supply 9. In this embodiment, no water is removed from the first tank 10a at this point.

The next stage of the treatment method is shown in Figure 3e. At this point, the aeration part of the first process has finished and the fluid pulse stage begins (although in other embodiments, aeration may continue for the first part or the entire duration of the fluid pulse stage). In this embodiment, the aeration process provides the mixing of the substrate 30a in the first tank 10a so that some of the substrate 30a is suspended in the treated water. Treated wastewater 45 from the second tank 10b is now transferred to the first tank 10b via fluid transfer assembly 7 and with the use of pump assembly 8, so as to displace the water and suspended substrate 45' out of the outlet 6 and to the second processing apparatus 60 via outlet branch 6b. The amount of treated wastewater 45 transferred from the second tank 10b to the first tank 10a in this embodiment is approximately 10% of the total capacity of the tank 10b and the total amount of water in the water and suspended substrate 45' discharged is 0 to 25 % (e.g. 2 to 5%) of the total treated wastewater 45 discharged from the first tank. As shown in Figure 3e, at this point, wastewater 40 is still supplied to the second tank 10b (and treatment is occurring), but discharge via decanter 25b no longer occurs as the output through fluid transfer assembly 7 has a higher flow rate than the influent via input 20b.

After this and as shown in Figure 3f, the supply 5 is switched back to the first tank 10a so that the first treatment process can be repeated. At this point, the second tank 10a undergoes aeration and once this is complete, the fluid pulse step is carried out wherein fluid from the first tank 10a is transferred to the second tank 10b to displace the suspended solids and treated water (see Figure 3g).

The entire process can be further repeated so as to provide a continuous water treatment process.

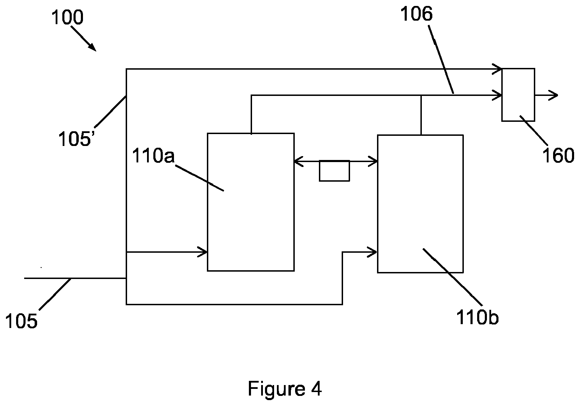

Although the water treatment system 1 allows for direct discharge of treated water 45 via output branch 6a, in another embodiment a water treatment system 100 (shown in Figure 4) is arranged such that all of the treated water discharged from the tanks 110a and 110b provided in the system 100 is transferred to the second processing apparatus 160. In some embodiments, the second processing apparatus 160 may be a wastewater treatment process, such as ICEAST™, which is a sequential batch reactor that provides further treatment via a biological treatment. In this embodiment, the secondary processing apparatus 160 receives a proportion of approximately 35% of the wastewater 140 directly from the wastewater supply 105 (i.e. which bypasses tanks 110a and 110b via bypass 105') so as to maintain biological integrity. In this way, the tanks 110a and 110b act as a primary treatment which reduces the amount of treatment required by the second processing apparatus 160. This is particularly advantageous as the second processing apparatus 160 receives a continuous or generally continuous flow of water from the tanks 110a, 110b and because the primary part of the system (e.g. the tanks 110a, 110b and associated piping, mixing equipment - i.e. prior to the second processing apparatus 160) can be retrofitted to existing processing facilities to improve their efficiency and/or improve the quality of the final effluent. In other words, the tank system can operate as a primary treatment for the wastewater.

In the embodiment described with respect to Figure 4, a proportion of the wastewater from the wastewater supply 105 is provided directly to the second water treatment assembly 160 via bypass 105'. In this way, biological integrity (i.e. nutrient balance) can be maintained, where 160 is a biological treatment process. For example, in some embodiments about 25% to 35 % of the wastewater provided from the wastewater supply 105 may be directed to the second water treatment assembly 160, while about 65% to 75% of the wastewater provided from the wastewater supply 105 may be directed to the tanks 110a, 110b.

In embodiments where a secondary treatment apparatus is a biological treatment, the secondary treatment apparatus receives at least a portion of wastewater directly from the wastewater supply (i.e. bypassing any primary treatment vessels), which can be between 10% and 40%, for example 25% to 35%. In embodiments where a secondary treatment apparatus is non-biological (e.g. a filtration step), no bypass is required.

Other variations to the disclosed embodiments can be understood and effected by those skilled in the art in practicing the claimed invention, from a study of the drawings, the disclosure, and the appended claims. For example:
Although the embodiments described above comprise two tanks as part of the primary treatment (i.e. before any further secondary treatment), it will be appreciated that more than two treatment tanks and associated processes can be used, with any configuration of tanks used in the fluid pulse stage;
Although the fluid transfer system 7 and pump system 8 is described with a particular pipe and pump arrangement, it will be appreciated that the pump system 8 may comprise one pump per tank, or multiple pumps and the fluid transfer system 7 may comprise different pipework arrangements in alternative embodiments; and
Although the embodiments above include a second wastewater treatment apparatus, such an apparatus does not necessary have to be present.

## Claims

1. A method for treating wastewater, the method comprising:
a first treatment process comprising the steps of: providing wastewater (40) from a wastewater supply (5; 105) to a first vessel (10a; 110a) comprising a first wastewater treatment substrate (30a); treating the wastewater (40) in the first vessel (10a; 110a) so as to provide treated wastewater (45); and discharging at least a portion of the treated wastewater (45) from the first vessel (10a; 110a); and
a second treatment process comprising the steps of providing wastewater (40) from the wastewater supply (5; 105) to a second vessel (10b; 110b) comprising a second wastewater treatment substrate (30a); treating the wastewater (40) in the second vessel (10b; 110b) to provide treated wastewater (45); and discharging at least a portion of the treated wastewater (45) from the second vessel (10b; 110b);
wherein the first treatment process further comprises the steps of: mixing the contents of the first vessel (10a; 110a) so as to suspend at least a portion of the first substrate (30a) in treated wastewater (45); and, subsequently, discharging at least a portion of the treated wastewater and suspended substrate (45') from the first vessel (10a; 110a) by transferring a portion of the fluid contained in the second vessel (10b; 110b) into the first vessel (10a; 110a) so as to displace the treated wastewater and suspended substrate (45') from the first vessel (10a; 110a).

2. The method of claim 1, wherein the flow rate of the fluid transferred during the step of transferring a portion of the fluid contained in the second vessel (10b; 110b) to the first vessel (10a; 110a) is greater than the flow rate of the wastewater (40) provided to the first vessel (10a; 110a) from the wastewater supply (5; 105) during the step of providing wastewater (40) from a wastewater supply (5; 105) to the first vessel (10a; 110a),
optionally wherein the fluid of the second vessel (10b; 110b) is transferred to the first vessel (10a; 110a) by pumping the fluid from the second vessel (10b; 110b) using a high volume, low pressure pump (8).

3. The method of any preceding claim, wherein the first vessel (10a; 110a) further comprises a decanter (25a) and wherein the step of discharging at least a portion of the treated wastewater and suspended substrate (45') from the first vessel (10a; 110a) by transferring a portion of the fluid contained in the second vessel (10b; 110b) into the first vessel (10a; 110a) so as to displace the treated wastewater and suspended substrate (45') of the first vessel (10a; 110a) comprises displacing the portion of the treated wastewater and suspended substrate (45') out through the decanter (25a).

4. The method of any preceding claim, wherein the second treatment process further comprises the steps of: mixing the contents of the second vessel (10b; 110b) so as to suspend at least a portion of the second substrate (30b) in treated wastewater (45); and subsequently discharging at least a portion of the treated wastewater and suspended substrate (45') from the second vessel (10b; 110b).

5. The method of claim 4, wherein the step of discharging at least a portion of the treated wastewater and suspended substrate (45') from the second vessel (10b; 110b) comprises either: transferring a portion of the fluid contained in the first vessel (10a; 110a) into the second vessel (10b; 110b) so as to displace the treated wastewater and suspended substrate (45') of the second vessel (10b; 110b) or transferring a portion of the fluid contained in a third vessel comprising a third wastewater treatment substrate into the second vessel (10b; 110b) so as to displace the treated wastewater and suspended substrate (45') of the second vessel (10b; 110b);
optionally wherein the flow rate of the fluid transferred during the step of transferring a portion of the fluid contained in the first (10a; 110b) or third vessel to the second vessel (10b; 110b) is greater than the flow rate of the wastewater (40) provided to the second vessel (10b; 110b) from the wastewater supply (5; 105) during the step of providing wastewater (40) from a wastewater supply (5; 105) to the second vessel (10b; 110b).

6. The method of any preceding claim, wherein the fluid comprises treated wastewater (45) and/or treated wastewater and suspended substrate (45');
wherein the method further comprises the step of providing the treated wastewater and suspended substrate (45') to a solids processing assembly (60; 160) to remove the suspended substrate from the treated wastewater after discharge from the respective vessel (10a; 10b; 110a; 110b); and/or
wherein the method is for reducing the nitrogen, carbon and phosphorus content of the wastewater (40); optionally wherein the step of treating the wastewater (40) comprises treating the wastewater (40) under anaerobic, anoxic and aerobic conditions so as to reduce the nitrogen, carbon and phosphorus content of the wastewater (40).

7. The method of any preceding claim, wherein the first treatment process further comprises the step of aerating the first vessel (10a; 110a) and the second treatment process comprises the step of aerating the second vessel (10b; 110b).

8. The method of claim 7, wherein the step of aerating in each of the first and second treatment processes is carried out after the respective step of providing a wastewater (40) to the respective first (10a; 110a) or second vessel (10b; 110b).

9. The method of claim 7 or 8, wherein the first treatment process and the second treatment process are synchronised such that the first vessel (10a; 110a) is aerated as the step of providing wastewater (40) from the wastewater supply (5; 105) to the second vessel (10b; 110b) is performed and/or such that the second vessel (10b; 110b) is aerated as the step of providing wastewater (40) from the wastewater supply (5; 105) to the first vessel (10a; 110a) is performed.

10. The method of any of claims 7 to 9, where the step of aerating the first (10a; 110a) or second vessel (10b; 110b) comprises increasing the dissolved oxygen content of the contents of the first (10a; 110a) or second vessel (10b; 110b), respectively; and/or
wherein the step of aerating the first vessel (10a; 110a) comprises mixing the contents of the first vessel (10a; 110a) so as to suspend at least a portion of the first substrate (30a) in treated wastewater (45); and wherein the step of discharging at least a portion of the treated wastewater and suspended substrate (45') from the first vessel (10a; 110a) is carried out after the step of aerating the first vessel (10a; 110a).

11. The method of any preceding claim,
wherein the first and second treatment processes are repeated; and/or
wherein the first and/or second wastewater treatment substrates (30a; 30b) comprise an activated sludge or derivative of an activated sludge.

12. The method of any preceding claim, wherein the method further comprises further processing the treated wastewater (45) and/or the treated wastewater and suspended substrate (45') by directing the treated wastewater (45) and/or treated wastewater and suspended substrate (45') from the first (10a; 110a) or second vessels (10b; 110b) to a further water treatment assembly (60; 160);
optionally wherein the further water treatment assembly (60; 160) is selected from a biological water treatment assembly or filtration system, optionally selected from one of: a sequence batch reactor, bioreactor, a fixed film system, a conventional activated sludge system, or a solids removal system.

13. The method of claim 12, further comprising a further substrate removal step in which a portion of the substrate (30a; 30b) is removed from the first (10a; 110b) and/or second vessel (10b; 110b), optionally wherein the portion of substrate (30a; 30b) is transferred to the further treatment assembly (60; 160).

14. The method of any preceding claim, wherein the step of discharging at least a portion of the treated wastewater (45) from the first or second vessel (10b; 110b) is carried out as wastewater is provided to the first (10a; 110b) or second vessel (10b; 110b), respectively,
optionally wherein the step of providing wastewater (45) to the first or second vessel (10b; 110b) causes treated wastewater to be displaced from the first or second vessel (10b; 110b), respectively, such that treated wastewater (45) is discharged from the first (10a; 110b) or second vessel (10b; 110b), respectively.

15. A wastewater treatment system (1; 100) for treating wastewater (40) to provide treated wastewater (45'), the system (1; 100) comprising:
a first vessel (10a; 110a) and a second vessel (10b; 110b), each vessel (10a; 10b; 110a; 110b) comprising an input (20a; 20b), an output (25a; 25b) and a wastewater treatment substrate (30a; 30b);
a wastewater supply (5; 105) fluidly connected to the inputs (20a; 20b) of the first (10a; 110a) and second vessels (10b; 110b) for providing wastewater (40) to the first (10a; 110a) and second vessels (10b; 110b); and a fluid transfer assembly (7) fluidly connecting the first (10a; 110a) and second vessels (10b; 110b) so as to allow the transfer of fluid from the second vessel (10b; 110b) to the first vessel (10a; 110a),
wherein the system (1; 100) further comprises:
a mixing apparatus adapted to mix the contents of the first vessel (10a; 110a) so as to suspend a portion of the wastewater treatment substrate (30a) in treated wastewater (45) in the first vessel (10a; 110a); and
a controller for controlling operation of the fluid transfer assembly (7) and adapted to, after the mixing assembly has been operated, operate the fluid transfer assembly (7) so as to transfer fluid from the second vessel (10b; 110b) to the first vessel (10a; 110a) and thereby displace and discharge at least a portion of the treated wastewater and suspended substrate (45') from the first vessel (10a; 110a) via the outlet of the first vessel (10a; 110a).

16. The wastewater treatment system (1; 100) of claim 15,
wherein the outlet of the first vessel (10a; 110a) is a decanter (25a);
wherein the fluid transfer assembly (7) is in fluid communication with the inlet (20a) of the first vessel (10a; 110a) such that fluid transferred by the fluid transfer assembly (7)can be provided to the inlet of the first vessel (10a; 110a); and/or
wherein the wastewater supply (5; 105) is adapted to provide a continuous feed of wastewater (40) such that at least one of the vessels (10a, 10b; 110a; 110b) is supplied with wastewater (40) during use of the wastewater treatment system (1; 100).
